# EUROPEAN PATENT APPLICATION

(11) **EP 1 081 066 A2**
(43) Date of publication of application: **07.03.2001**
(21) Application number: 00660136.3
(22) Date of filing: 09.08.2000
(51) Int. Cl.: B65G 19/18

(54) **Scraper conveyor for transporting bulk material**

(30) Priority: 27.08.1999 FI 991827
(71) Applicant: BMH Wood Technology Oy, 26101 Rauma (FI)
(72) Inventor: Timo, Linnala, 26200 Rauma (FI)
(74) Representative: Savolainen, Seppo Kalevi

(57) **Abstract**

A scraper conveyor comprises scrapers (30) arranged consecutively to a chain arrangement (28,29) for transporting bulk material along a surface (10), a tightening apparatus (31) moving longitudinally along the conveyor for tightening the chain arrangement (28,29), and an emergency stop wire (34) arranged on the side of the conveyor and connected to at least one safety switch, which wire when moved causes the safety switch to stop the conveyor. Protruding parts (35) have been arranged at the end (B) of the conveyor which comprises the tightening apparatus (31) which parts extend in longitudinal direction on both sides of the conveyor past the end (B) and the emergency stop wire (34) is guided through the protruding part (35) on one side to the protruding part (35) on the other side in such a manner that when the conveyor is operating freely, the scrapers (30) run at a distance from the emergency stop wire (34).

## Description

### BACKGROUND OF THE INVENTION

The invention relates to a scraper conveyor for transporting bulk material, which conveyor has two opposing ends, of which one is an unloading end of bulk material and which conveyor comprises rotating elements arranged at least at said opposing ends, a chain arrangement arranged between said rotating elements at the opposing ends, several scrapers arranged consecutively at a distance from each other in the chain arrangement for transporting bulk material along a transport surface located below the conveyor to the unloading end of the conveyor, a drive arrangement for running the conveyor, a tightening apparatus arranged to the end of the conveyor opposite to the unloading end and moving longitudinally along the conveyor for tightening the chain arrangement, and an emergency stop wire connected to at least one safety switch and arranged on the side of the conveyor, which wire when moved causes the safety switch to stop the conveyor. Conveyors of this type are used to transport bulk material, for instance wood chips in pulp mills.

In a known wood chip storage, wood chips are transported from the wood chips production point with an enclosed belt conveyor located high in relation to the wood chip storage platform to a stacker which also has a belt conveyor and which is arranged rotatable around a vertical support. The stacker can thus form around and below it a circular stack which is then pulled down for transporting to the actual place of use.

The stack can also be made oblong, in which case it is formed with a linearly moving stacking apparatus.

In each above-mentioned case, pulling down the stack from its outside is usually performed with a scraper conveyor, the wood chips being loosened for transport by it by means of apparatuses arranged in the support structures of the conveyor, which scatter the material from the side of the stack cross-sectionally in front of the scrapers of the scraper conveyor. The scattered material is transported onwards to an unloading funnel which distributes the material on to a belt conveyor located below the storage in a tunnel for transport to the final place of use.

Currently, there is usually an emergency stop wire on the side of the scraper conveyor, which a person standing beside the apparatus can pull in a dangerous situation to stop the conveyor or the operation of the entire unloading apparatus. Work safety regulations require the existence of such an emergency stopping device.

A problem with this unloading apparatus is that if the chain arrangement of the scraper conveyor breaks for some reason, considerable damage may be caused to the apparatus. The chain arrangement usually comprises two chains which are located at a distance from each other close to the side edges of the scrapes. In a typical damage situation, one of these chains, for instance, is broken. If the operators do not in time detect that the chain has broken, several scoop-like scrapers can be damaged by hitting against the frame or support structures of the apparatus when the drive pulls the broken chain. The structures may also be damaged. If the break in the chain is detected immediately, the chain only needs to be joined together again, which is a relatively easy measure.

### BRIEF DESCRIPTION OF THE INVENTION

To avoid the above-mentioned problem, it would be very important to stop the drive arrangement of the scraper conveyor immediately when the chain arrangement or one of its chains breaks, because the stacking/unloading apparatus is normally controlled from a separate control room which does not have direct visibility to the scraper conveyor. It has, therefore, become necessary to create an automatic chain control apparatus. This object is achieved by a scraper conveyor of the invention, which is characterized in that at the end of the conveyor which comprises the tightening apparatus and which moves in longitudinal direction, protruding parts have been arranged, which extend in longitudinal direction on both sides of the conveyor past the end in question, and that an emergency stop wire is guided through the protruding part on one side to the protruding part on the other side in such a manner that when the conveyor is operating freely, the scrapers run at a distance from the emergency stop wire.

The invention is thus based on the idea of using one and the same part of an apparatus as an emergency stop and a chain control apparatus. The wire is set to run in a manner known per se through appropriate guide loops or the like attached to the frame of the conveyor, and the emergency stop wire is hung in the same manner. The wire is connected to one or more safety switches which open when pulled in either direction.

When a chain breaks or becomes entangled in something, the safety switch sends a signal to the control system which cuts off power from the drive of the conveyor - and, if necessary, from other drives of the storage system, too - and gives an alarm in the control room.

Operational alternatives of the control apparatus are as follows:
1 ) If a scraper is detached from one of its fixed ends or one of the chains breaks, it probably sags in the tightening end so that it touches the emergency stop wire.
2) If both chains break, the tightening apparatus moves backwards, whereby said wire tightens and the safety switch stops the conveyor.
3) If in the unloading end of the conveyor, which usually is the pull end, the chain gets caught or becomes entangled with something, the tightening apparatus moves towards the pull end, whereby the wire loosens and the safety switch stops the conveyor.
4) If, as in a preferred embodiment, the emergency stop wire runs on both sides of the conveyor to the unloading end of the conveyor and crosses the conveyor above it at a distance from the unloading end of the conveyor, the wire will stop the conveyor in a situation where a broken chain has ended on top of the casing of the conveyor.

A control apparatus of the scraper conveyor of the invention operating reliably in the above damage and failure situations provides the additional advantages that it has a very simple structure, it is easy to implement in existing scraper conveyors and thus causes very small additional costs.

### BRIEF DESCRIPTION OF THE FIGURES

In the following, the invention will be described in greater detail with reference to the attached drawings in which
Figure 1 shows a schematic of a wood chip storage seen diagonally from the top,
Figure 2 shows a schematic side view of a scraper conveyor of the invention with an unloading apparatus,

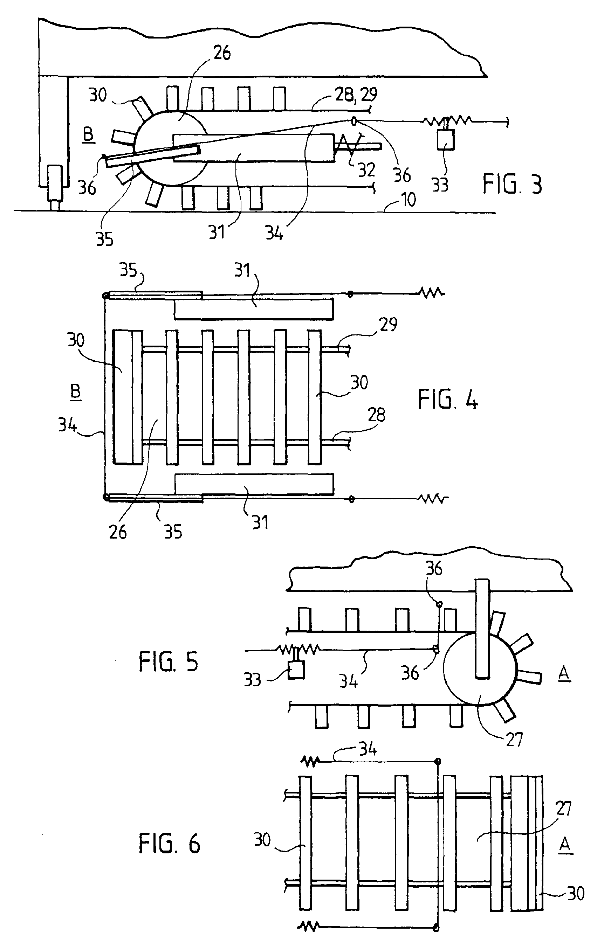

Figure 3 shows the tightening end of the scraper conveyor of the invention,
Figure 4 shows the tightening end of Figure 3 from above,
Figure 5 shows the unloading end of the scraper conveyor of the invention,
Figure 6 shows the unloading end of Figure 5 from above.

### DETAILED DESCRIPTION OF THE INVENTION

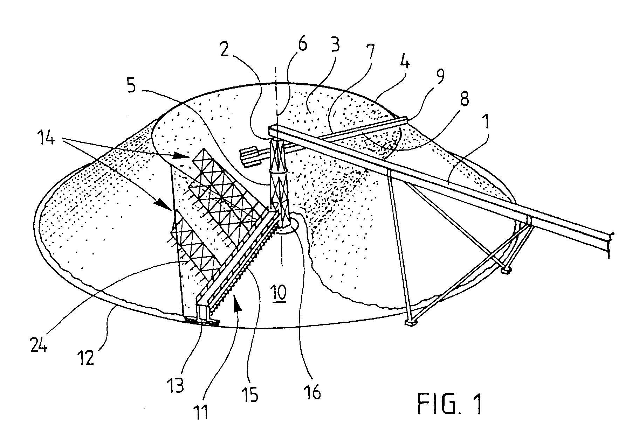

Figure 1 shows a typical circular bulk material storage, typically a wood chip storage to which wood chips are transported from the wood chip production point with an enclosed conveyor 1, for instance, which conveyor or at least its unloading opening 2 is located higher than the top 4 of the stack 3 being made. Below the unloading opening 2 of the conveyor 1 in the middle of the stack 3, a vertical support 5 is arranged and at its top end a stack making apparatus, i.e. stacker 7, which turns around the centre axis 6 of the vertical support 5 and which comprises a conveyor 8 whose unloading end 9 extends to a selected distance from the centre axis 6 of the vertical support 5. The wood chips coming out of the unloading opening 2 of the conveyor 1 are directed to the conveyor 8 of the stacker 7, and the wood chips falling from its unloading end 9 creates the circular stack 3.

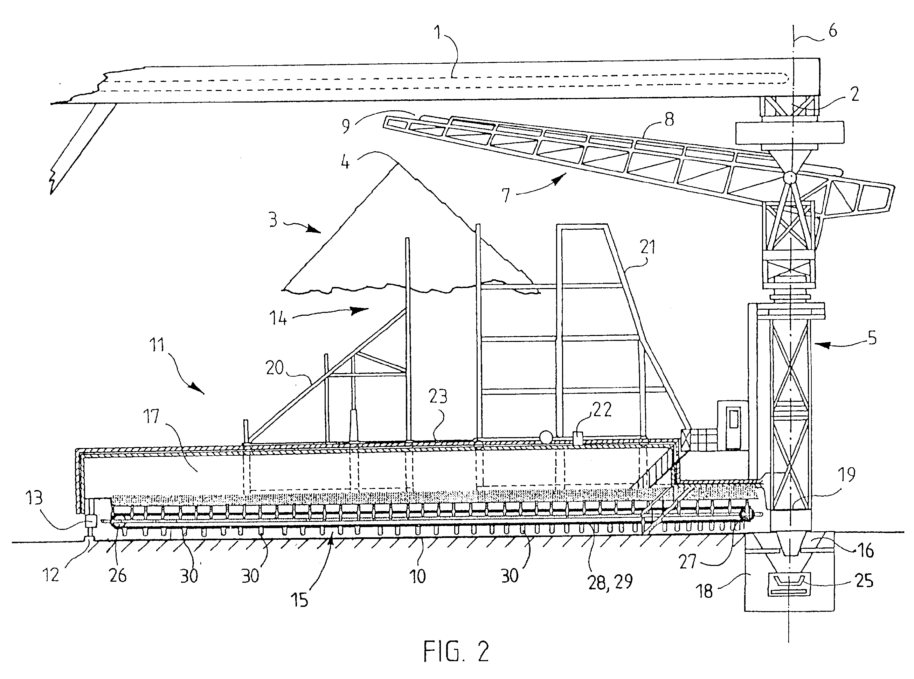

In Figures 1 and 2, an unloading apparatus 11 is arranged on the platform 10 of the stack 3, the unloading apparatus being fixed with bearings at its first end to the vertical support 5 and at its second end placed on the rails 12 surrounding the stack 3, whereby the first end of the unloading apparatus 11 can turn around the vertical axis 6 of the vertical support 5 independent of the turning of the stacker 7 and the second end can, at the same time, run along the rails 12. For this purpose, a transport motor 13 is arranged at the second end of the unloading apparatus 11.

This unloading apparatus 11 is arranged to pull down wood chips from the stack 3 substantially from its outside and it comprises a rake structure 14 for detaching wood chips and sliding them down the stack 3 and a scraper conveyor 15 for transporting the detached wood chips that have slid down the stack mainly horizontally along a transport surface 10 to the unloading point 16.

The scraper conveyor 15 is supported by a support beam 17 which can be a beam or lattice structure. The support beam 17 is fixed with bearings 19 to the vertical support 5 immediately above the unloading point, i.e. the unloading funnel 16.

In the embodiment of Figures 1 and 2, the rake structure 14 is made up of lattice structures 20 and 21 which are supported to the carriage 23 moving to and from along the support beam 17 by means of a transport apparatus 22. The lattice structures 20 and 21 have spikes 24 towards the stack 3, which spikes detach wood chips due to the to-and-fro movement and scatter them down for transport by the scraper conveyor 15.

The wood chips transported to the unloading funnel 16 drop from the funnel 16 to a conveyor 25 running in an underground tunnel 18 for onward transport to the final place of use.

The scraper conveyor 15 of the invention has at its opposing ends A, B rotating elements 26, 27 between which a chain arrangement of two parallel chains 28, 29 running at a distance from each other, to which chain arrangement several scrapers 30 arranged consecutively at a distance from each other in the longitudinal direction of the conveyor 15 for transporting the wood chips along the transport surface 10 below the conveyor 15 to the unloading end A of the conveyor and to the unloading point 16. The conveyor 15, in other words, the chain arrangement 28, 29, is driven by a drive arrangement, of which only the above-mentioned rotating element 27, with drive arranged to it, at the unloading end A of the conveyor 15 is shown. At the end B opposite to the unloading or drive end A of the conveyor 15, a tightening apparatus in the form of a tightening carriage 31 and moving longitudinally along the conveyor 15 has been arranged for tightening the chain arrangement 28, 29. The tightening carriage 31 tightens the chain arrangement 28, 29 driven by a spring system 32.

An emergency stop wire 34 is arranged on the side of the conveyor 15 and connected to safety switches 33, and when moved the wire makes the safety switch 33 stop the conveyor 15. In addition, protruding parts or shafts 35 have been arranged at the tightening end B of the conveyor 15 on both sides of its tightening carriage 31 and they extend in longitudinal direction slightly past the tightening end B on both sides of the conveyor 15, and the emergency stop wire 34 is directed through the end of one protruding part 35 on one side to the end of the protruding part 35 on the other side in such a manner that when the conveyor is operating freely, the scrapers 30 run at a distance from the emergency stop wire 34. The emergency stop wire 34 also runs to the unloading end A of the conveyor on both sides of the conveyor 15 and crosses the conveyor 15 above it at a distance from the unloading end A of the conveyor. Said distances are selected separately for each conveyor to be as short as possible in such a manner, however, that no unnecessary stops occur. Control loops 36 attached to the frame of the conveyor 15 are used in fixing and controlling the loop formed by the emergency stop wire 34 around the conveyor 15. Safety switches 33 are located on both sides of the conveyor 15 and their number depends mainly on the length of the conveyor 15.

As already described above, the controlling apparatus operates as follows:
1) If a scraper 15 is detached from one of its fixed ends or one of the chains 28, 29 breaks, the scraper 15 probably sags in the tightening end B so that it touches the emergency stop wire 34 which when moving triggers the safety switch 33.
2) If both chains 28, 29 break, the tightening carriage 31 moves backwards, whereby said wire 34 tightens and the safety switch 33 stops the conveyor 15.
3) If in the unloading or drive end A of the conveyor, the chain 28, 29 gets caught or becomes entangled with something, the tightening carriage 31 moves towards the end A, whereby the wire 34 loosens and the safety switch 33 stops the conveyor 15.
4) If a broken chain 28, 29 ends on top of the casing of the conveyor 15, the wire 34 is tightened above the unloading end A and the safety switch 33 again stops the conveyor 15.

The above description of the invention is only intended to illustrate the basic idea of the invention. A person skilled in the art can, however, implement its details in many alternative ways within the scope of the attached claims. At the same time, it should be noted that the scraper conveyor of the invention and its emergency stop and control apparatus can be applied to any other point of use of a scraper conveyor, in which the operation of the scraper conveyor needs to be automatically monitored.

## Claims

1. A scraper conveyor for transporting bulk material, which conveyor (15) has two opposing ends (A, B), of which one is an unloading end (A) of bulk material and which conveyor comprises
rotating elements (26, 27) arranged at least at said opposing ends (A, B),
a chain arrangement (28, 29) arranged between said rotating elements (26, 27) at the opposing ends (A, B),
several scrapers (30) arranged consecutively at a distance from each other to the chain arrangement (28, 29) for transporting bulk material along a transport surface (10) located below the conveyor to the unloading end (A) of the conveyor,
a drive arrangement (27) for driving the conveyor,
a tightening apparatus (31) arranged at the end (B) opposite to the unloading end (A) of the conveyor and moving longitudinally along the conveyor for tightening the chain arrangement (28, 29), and
an emergency stop wire (34) arranged on the side of the conveyor and connected to at least one safety switch (33), which wire when moved causes the safety switch to stop the conveyor, **characterized** in that protruding parts (35) have been arranged at the end (B) of the conveyor which comprises the tightening apparatus (31) and which moves in longitudinal direction, which parts extend in longitudinal direction on both sides of the conveyor past the end (B) in question, and that the emergency stop wire (34) is guided through the protruding part (35) on one side to the protruding part (35) on the other side in such a manner that when the conveyor is operating freely, the scrapers (30) run at a distance from the emergency stop wire (34).

2. A scraper conveyor as claimed in claim 1, **characterized** in that the protruding parts (35) are attached to the tightening apparatus which is in the form of a tightening carriage (31) moving in longitudinal direction.

3. A scraper conveyor as claimed in claim 1 or 2, **characterized** in that the emergency stop wire (34) runs on both sides of the conveyor to the unloading end (B) of the conveyor and crosses the conveyor above it at a distance from the unloading end of the conveyor.

4. A scraper conveyor as claimed in any one of the preceding claims, **characterized** in that it is arranged with an unloading apparatus (11) of bulk material, which is arranged to pull down material from the stack (3) substantially on its outside and which comprises means for detaching material (14, 24) from the stack.
